# EUROPEAN PATENT APPLICATION

(11) **EP 1 938 731 A1**
(43) Date of publication of application: **02.07.2008**
(21) Application number: 06805030.1
(22) Date of filing: 23.10.2006
(51) Int. Cl.: A47L 9/10

(54) **FILTER CORE AND FILTER**

(30) Priority: 21.10.2005 CN 200510015529
(71) Applicant: LG Electronics (Tianjin) Appliances Co., Ltd., Bei Chin District Tianjin 300402 (CN)
(72) Inventor: ZHANG, Fang, Tianjin 300402 (CN); RHEE, Wong Hag, Tianjin 300402 (CN); JEONG, Won Chul, Tianjin 300402 (CN)
(74) Representative: Frost, Alex John
(86) International application number: PCT/CN2006/002822
(87) International publication number: WO 2007/045190

(57) **Abstract**

The present invention relates to a filter element and a filter, wherein the filter element (2) comprises a cylindrical filter paper (8), as well as an annular upper ring (6) and an annular lower ring (7) connected to two ends of the cylindrical filter paper; gaps (C) are respectively formed, at least in positions on the outer peripheral surfaces of the annular upper ring (6) and annular lower ring (7), wherein each position is corresponding to an approximately central portion of each of the folds of the cylindrical filter paper (8). The filter element (2) can be pulled off in case of being cleaned, so that distances between the folds of the cylindrical filter paper (8) will be expanded, for the convenience of clearing dust off the cylindrical filter paper.

## Description

### Field of the Invention

The present invention relates to a filter for a dust collector, and particularly, to a filter element and a filter, wherein the filter element can be pulled off, so that distances between the folds of the filter element are expanded, for the convenience of cleaning.

### Background of the Invention

The dust collector is an electric apparatus for clearing dust off the floors, carpets, walls, furniture, clothing and various gaps.

Based on structures and shapes, dust collectors are classified into upright vacuum cleaners, canister vacuum cleaners, and portable vacuum cleaners.

The dust collector mainly comprises a motor for generating a suction force by introducing current, a suction nozzle for forming an air path system, a dust absorption hose, a filter, and a dust tank for accumulating absorbed matter.

The body of the canister vacuum cleaner generally includes a front cover, a rear cover, bottom casing assemblies, wheels, etc..

The top of the front cover is provided with a hose connector, the bottom casing under the front cover is formed with the dust tank for accumulating absorbed matter, and a removable dust collecting paper bag or filter is provided in the dust tank.

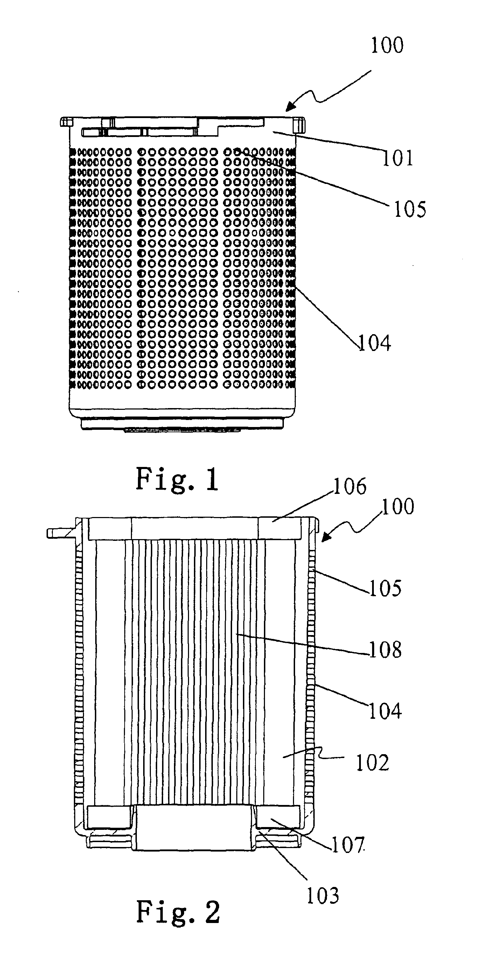

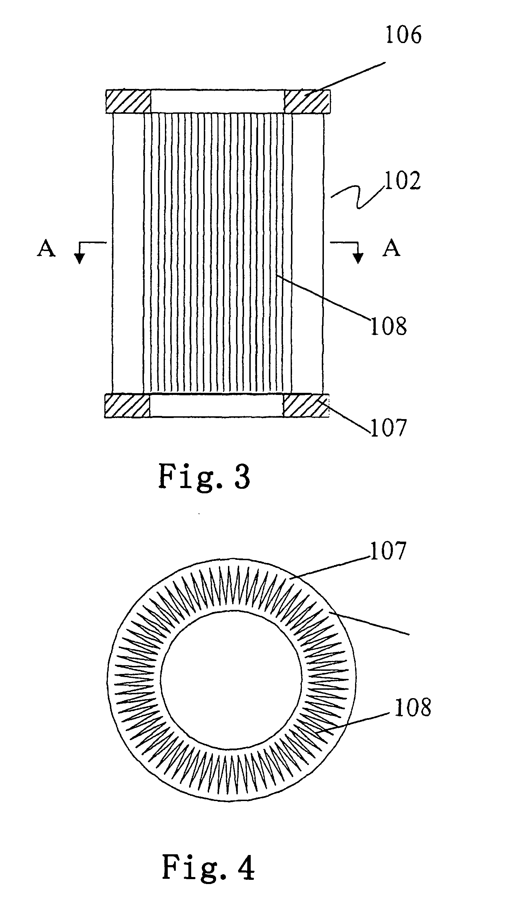

A filter of the prior art is shown in Figs. 1~4, and the filter 100 comprises: a filter closure 101 consisting of a hollow cylinder 104 having a plurality of apertures 105 around, and a base 103 having a hole at the bottom and protruding inward; and a filter element 102 mounted in the filter closure 101 and connected to the base, wherein the filter element 102 consists of a cylindrical filter paper 108 having a plurality of folds, as well as an annular upper ring 106 and an annular lower ring 107 connected to two ends of the cylindrical filter paper 108. The annular upper ring 106, the annular lower ring 107 and the two ends of the cylindrical filter paper 108 are injection-molded integrally to form a one-piece filter element.

The filter element 102 of the prior art has the following defects: as the annular upper ring 106, the annular lower ring 107 at the two ends of the cylindrical filter paper 108 and the two ends of the cylindrical filter paper are injection-molded integrally to form the one-piece filter element, they cannot be disconnected from each other. The cylindrical filter paper 108 is in a folded structure, and when the dust collector has been used for a period of time, much dust will attach to the cylindrical filter paper 108. However, dust in the folds is difficult to be cleaned up, because the folds of the cylindrical filter paper 108 are limited by the annular upper ring 106 and the annular lower ring 107, and cannot be completely unfolded for cleaning. Thus the air permeability of the cylindrical filter paper 108 is poor, which greatly affects the filtration effect, and causes obvious inconvenience to users.

### Summary of the Invention

The technical problem to be solved in the invention is to provide a filter element and a filter, wherein the folds of the cylindrical filter paper of the filter element can be pulled off to expand distances between the folds, for the convenience of cleaning.

The technical solution adopted in the present invention for solving the above technical problem is as follows.

A filter element, comprising a cylindrical filter paper having a plurality of folds and a cylindrical shape, as well as an annular upper ring and an annular lower ring connected to two ends of the cylindrical filter paper; gaps are respectively formed, at least in positions on the outer peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

The invention further provides a filter using the filter element, comprising a filter closure, consisting of a hollow cylinder having a plurality of apertures around, and a base having a hole at the bottom and protruding inward; and a filter element mounted in the filter closure and connected to the base, wherein the filter element consists of a cylindrical filter paper having a plurality of folds and a cylindrical shape, as well as an annular upper ring and an annular lower ring connected to two ends of the cylindrical filter paper. The filter element forms gaps respectively, at least in positions on the outer peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

In the filter element and filter of the present invention, as an optional embodiment, the two ends of the cylindrical filter paper can be bonded at a position between the outer and inner peripheral surfaces of the annular upper ring, and a position between the outer and inner peripheral surfaces of the annular lower ring, respectively.

In the filter element and filter of the present invention, as an optional embodiment, gaps are respectively formed, at least in positions on the inner peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

In the filter element and filter of the present invention, the radial depths of the gaps on the annular upper ring and the annular lower ring are smaller than the radial widths from the outer peripheral surfaces to the inner peripheral surfaces of the annular upper ring and the annular lower ring, so that connection portions are formed between inner end portions of the gaps on the inner peripheral surfaces and / or the outer peripheral surfaces, and the outer peripheral surfaces and / or the inner peripheral surfaces of the annular upper ring and the annular lower ring, for integrally connecting various parts of the annular upper ring, and various parts of the annular lower ring, respectively.

In order to ensure the connection strength of the annular upper ring and the annular lower ring, and prevent the folds of the cylindrical filter paper being broken as being stretched too much, preferably, the radial depth of a gap on the outer peripheral surface is smaller than a distance from the corresponding central portion of the folds of the cylindrical filter paper to the outer peripheral surface. Similarly, the radial depth of a gap on the inner peripheral surface is smaller than a distance from the corresponding central portion of the folds of the cylindrical filter paper to the inner peripheral surface.

In the filter element and filter of the present invention, as an optional embodiment, the upper end surface of the annular upper ring and / or the lower end surface of the annular lower ring can be an annular plane. As another optional embodiment, the upper end surface of the annular upper ring and / or the lower end surface of the annular lower ring can be provided with an annular recess to improve the sealing effect.

In order to improve the sealing effect, in the present invention, a sealing ring can be provided for the annular upper ring and / or the annular lower ring, and the sealing ring can be made of an elastic material such as polyurethane, rubber, etc.

In the filter element and filter of the present invention, the two ends of the cylindrical filter paper can be bonded with the annular upper ring and the annular lower ring by means of injection-molding. The two ends of the cylindrical filter paper have certain bonding heights with the annular upper ring and the annular lower ring, so as to improve the bonding strength with the annular upper ring and the annular lower ring, and prolong the service life of the filter element.

In the filter element and filter of the present invention, the annular upper ring and / or the annular lower ring is made of polyurethane.

In the filter element and filter of the present invention, as a detailed embodiment, the cylindrical filter paper has a cylindrical shape, and the annular upper ring and the annular lower ring form a circular shape together.

With respect to the filter element and filter having the above structures of the present invention, the annular upper ring and the annular lower ring can be pulled off with the folds of the cylindrical filter paper being stretched, because gaps are formed at least in positions on the outer peripheral surfaces of the annular upper ring and the annular lower ring connected to the two ends of the cylindrical filter paper, wherein each position is corresponding to a central portion of each of the folds of the cylindrical filter paper, and the gaps are linked up in an up and down direction. When the filter element needs to be cleaned after the dust collector working for a period of time, the filter element can be taken out from the filter closure to pull off the cylindrical filter paper, the annular upper ring and the annular lower ring, for expanding distances between the folds of the cylindrical filter paper and for the convenience of clearing dust off the folds, so that dust on the folds can be cleared off, and the air permeability and the filtration effect can be improved.

### Drawings

Fig. 1 is a structural drawing of the appearance of a filter of the prior art.
Fig. 2 is a sectional drawing of a filter structure of the prior art.
Fig. 3 is a sectional drawing of a filter element structure of the prior art.
Fig. 4 is an A-A sectional drawing.
Fig. 5 is a sectional drawing of a filter element structure of the present invention.
Fig. 6 is a top view of an annular upper ring of the filter element as shown in Fig. 5.
Fig. 7 is an enlarged drawing of the positional relation between partial folds and an annular lower ring in a B-B direction as shown in Fig. 5.
Fig. 8 is a structural drawing of the appearance of a filter of the present invention.
Fig. 9 is a sectional drawing of a filter structure of the present invention.
Fig. 10 is a sectional drawing of another filter element structure of the present invention.
Fig. 11 is an enlarged drawing of the positional relation between partial folds and an annular lower ring in a D-D direction as shown in Fig. 10.
Fig. 12 is a top view of an annular upper ring of the filter element as shown in Fig. 10.
Fig. 13 is a top view of an annular upper ring of the present invention which has no annular recess.
Fig. 14 is a drawing indicative of the connection states of a single fold of a cylindrical filter paper of the present invention with respect to an annular upper ring and an annular lower ring.
Fig. 15 is a drawing indicative of the connection states of a single fold of a cylindrical filter paper of the present invention with respect to an annular upper ring and an annular lower ring having annular recesses.
Fig. 16 is a sectional drawing of a filter element structure having a sealing ring in the present invention.
Fig. 17 is an enlarged sectional drawing of a sealing ring structure.

### Detailed Description of the Embodiments

Hereinafter the present invention is described in details on the basis of the drawings and the embodiments.

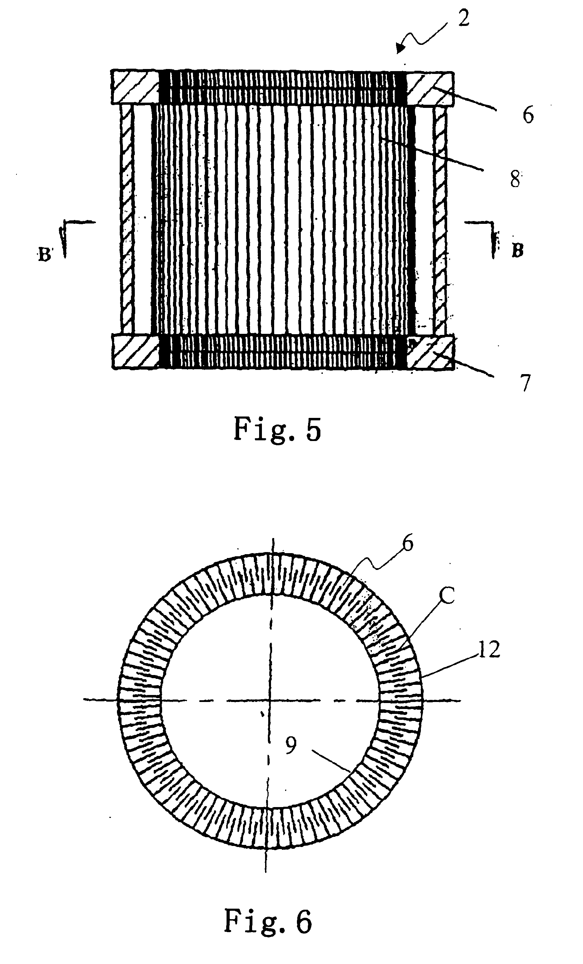

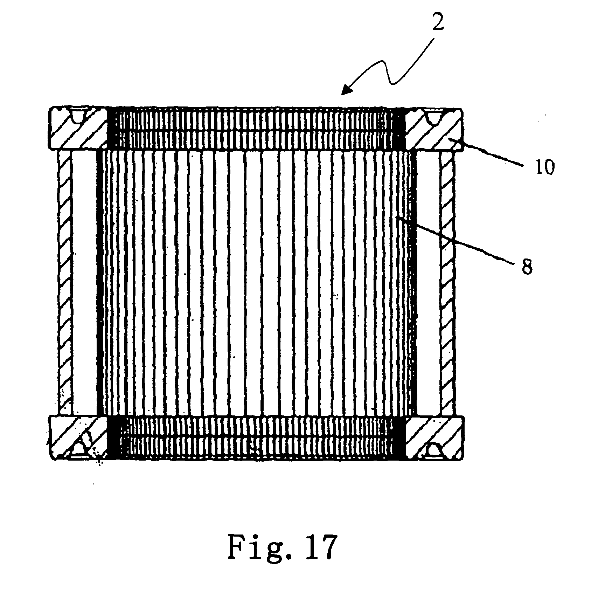

As shown in Figs. 5-17, the filter element 2 of the present invention comprises a cylindrical filter paper 8 having a plurality of folds and a cylindrical shape, as well as an annular upper ring 6 and an annular lower ring 7 connected to two ends of the cylindrical filter paper 8; gaps C are respectively formed, at least in positions on the outer peripheral surfaces 12 of the annular upper ring 6 and the annular lower ring 7, wherein each position is corresponding to an approximately central portion 82 of each of the folds 81 of the cylindrical filter paper 8, and the gaps are linked up in an up and down direction of the annular upper ring 6 and the annular lower ring 7.

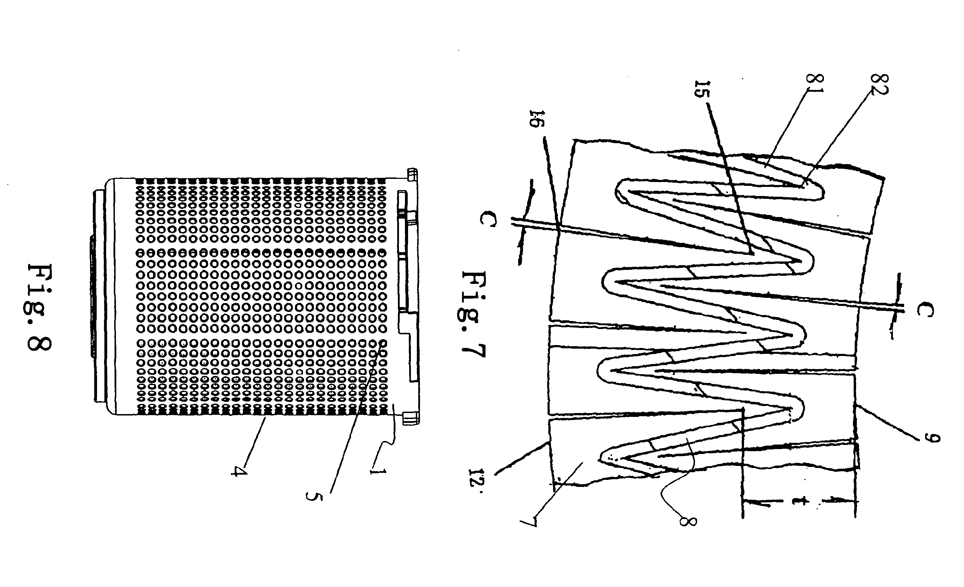

As shown in Figs. 8-9, the invention further provides a filter using the filter element 2, comprising a filter closure 1, consisting of a hollow cylinder 4 having a plurality of apertures 5 around, and a base 3 having a hole at the bottom and protruding inward; and a filter element 2 mounted in the filter closure 1 and connected to the base 3, wherein the filter element 2 consists of a cylindrical filter paper 8 having a plurality of folds and a cylindrical shape, as well as an annular upper ring 6 and an annular lower ring 7 connected to two ends of the cylindrical filter paper 8, the filter element 2 forms gaps C respectively, at least in positions on the outer peripheral surfaces 12 of the annular upper ring 6 and the annular lower ring 7, wherein each position is corresponding to an approximately central portion 82 of each of the folds 81 of the cylindrical filter paper 8, and the gaps C are linked up in an up and down direction of the annular upper ring 6 and the annular lower ring 7.

In the filter element 2 and the filter of the present invention, since the gaps C linked up are provided on the annular upper ring 6 and the annular lower ring 7, the gaps C on the outer peripheral surfaces 12 can be used to make the cylindrical filter paper 8 being pulled off, when the filter element 2 needs to be cleaned, so that distances between the folds 81 are expanded, and dust on the folds 81 of the cylindrical filter paper 8 can be conveniently swept or cleaned, thus dust on the folds 81 can be cleared off, and the air permeability and the filtration effect of the cylindrical filter paper 8 can be improved.

In the filter element and the filter of the present invention, as an optional embodiment and as shown in Figs. 5-7, gaps C are respectively formed, in positions on the inner peripheral surfaces 9 and the outer peripheral surfaces 12 of the annular upper ring 6 and the annular lower ring 7, wherein each position is corresponding to an approximately central portion 82 of each of the folds 81 of the cylindrical filter paper 8, and the gaps C are linked up in an up and down direction of the annular upper ring 6 and the annular lower ring 7. Since the inner peripheral surfaces 9 and the outer peripheral surfaces 12 are provided with the gaps linked up in the up and down direction, a peripheral limitation applied by the annular upper ring 6 and the annular lower ring 7 to the cylindrical filter paper 8 is reduced, and it is more convenient to pull off the cylindrical filter paper 8 when cleaning the filter element, so as to expand the distances between the folds 81, clear the dust thereon, and improve the air permeability and the filtration effect of the cylindrical filter paper.

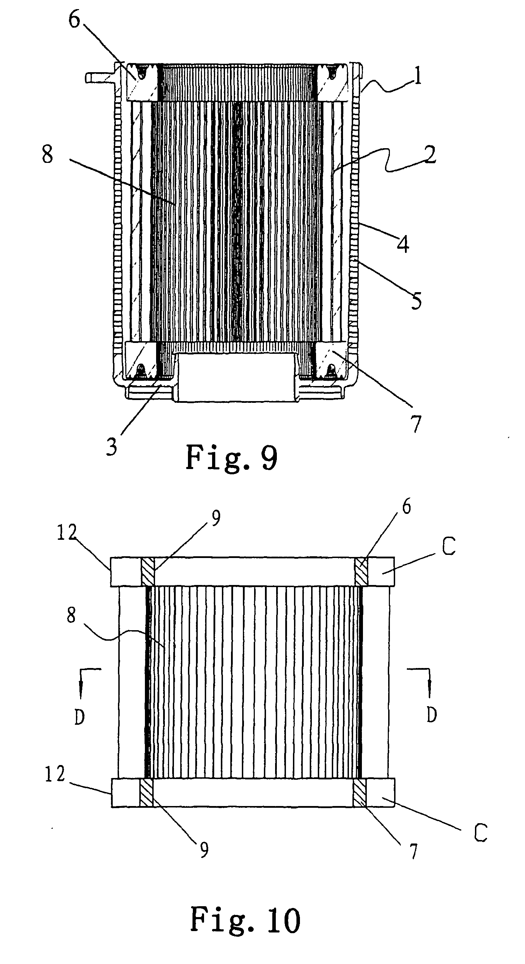

As another optional embodiment shown in Figs. 10-12, gaps C are respectively formed, only in positions on the outer peripheral surfaces 12 of the annular upper ring 6 and the annular lower ring 7, wherein each position is corresponding to an approximately central portion 82 of each of the folds 81 of the cylindrical filter paper 8, and the gaps C are linked up in an up and down direction of the annular upper ring 6 and the annular lower ring 7. When cleaning the filter element, the gaps C provided on the outer peripheral surfaces 12 also help to pull off the cylindrical filter paper 8, so as to expand the distances between the folds 81, and clear off dust on the folds. The embodiment only requires to process the gaps C on the outer peripheral surfaces 12, thus the process is simple and the cost is low, but the effect is a little poorer than that produced by forming gaps C on both the inner and the outer peripheral surfaces.

In the present invention, the gaps C on the inner peripheral surface 9 extend from an outer end portion 16 on the inner peripheral surface 9 to an inner end portion 15 in a direction toward the outer peripheral surface 12; and the gaps C on the outer peripheral surface 12 extend from an outer end portion 16 on the outer peripheral surface to an inner end portion 15 in a direction toward the inner peripheral surface 9.

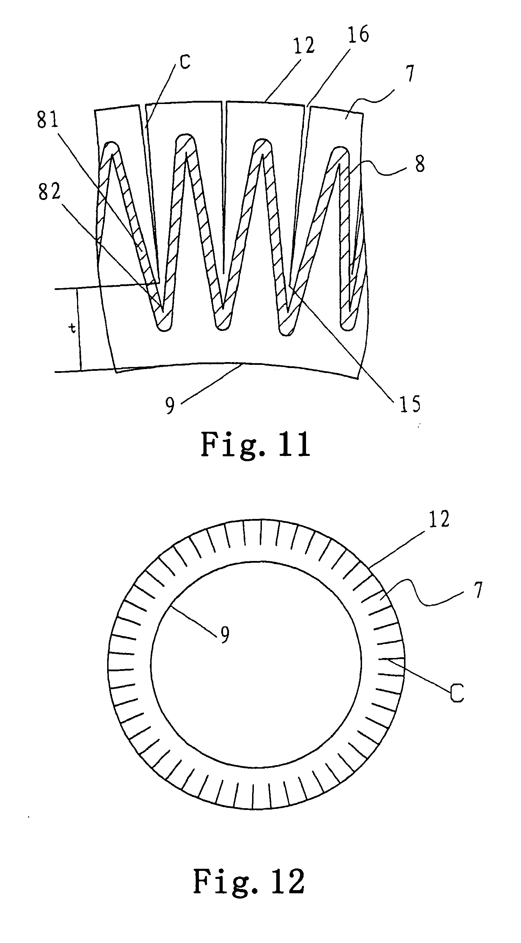

As shown in Figs. 7 and 11, in the present invention, as an optional embodiment, the two ends of the cylindrical filter paper 8 can be coupled to positions between the inner peripheral surfaces 9 and the outer peripheral surfaces 12 of the annular upper ring 6 and the annular lower ring 7, so that the inner diameters of the annular upper ring 6 and the annular lower ring 7 are smaller than the inner diameter of the cylindrical filter paper 8, and the outer diameters of the annular upper ring 6 and the annular lower ring 7 are larger than the outer diameter of the cylindrical filter paper 8.

In the filter element and filter of the present invention, as shown in Figs. 5-7 and 10-11, the radial depths of the gaps C on the annular upper ring 6 and the annular lower ring 7 are smaller than the radial widths from the outer peripheral surfaces 12 to the inner peripheral surfaces 9 of the annular upper ring 6 and the annular lower ring 7, so that connection portions having a width t are formed between the inner end portions 15 of the gaps C on the inner peripheral surfaces 9 and / or the outer peripheral surfaces 12, and the outer peripheral surfaces 12 and / or the inner peripheral surfaces 9 of the annular upper ring 6 and the annular lower ring 7, for integrally connecting the annular upper ring 6 and the annular lower ring 7, respectively.

In order to ensure the connection strength of the upper ring 6 and the annular lower ring 7, and avoid breaking the folds of the cylindrical filter paper 8 when they are stretched out too much, preferably, the radial depths of the gaps C on the outer peripheral surfaces 12 are smaller than the corresponding distances from the central portions 82 of the folds 81 of the cylindrical filter paper 8 to the outer peripheral surfaces 12. Similarly, the radial depths of the gaps C on the inner peripheral surfaces 9 are also smaller than the corresponding distances from the central portions 82 of the folds of the cylindrical filter paper 8 to the inner peripheral surfaces 9.

As shown in Figs. 5-6 and 14, in the filter element and filter of the present invention, as another optional embodiment, an upper end surface of the annular upper ring 6 and / or a lower end surface of the annular lower ring 7 can be an annular plane(s).

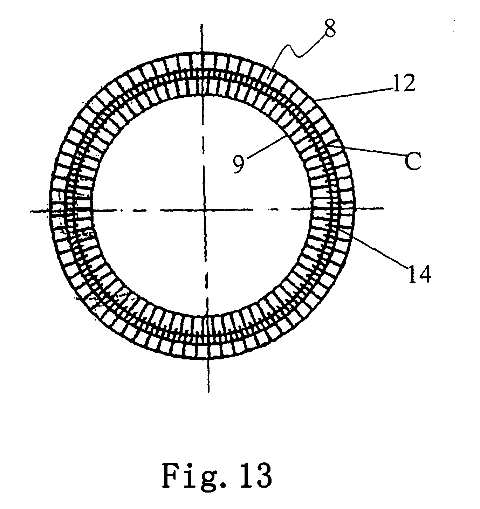

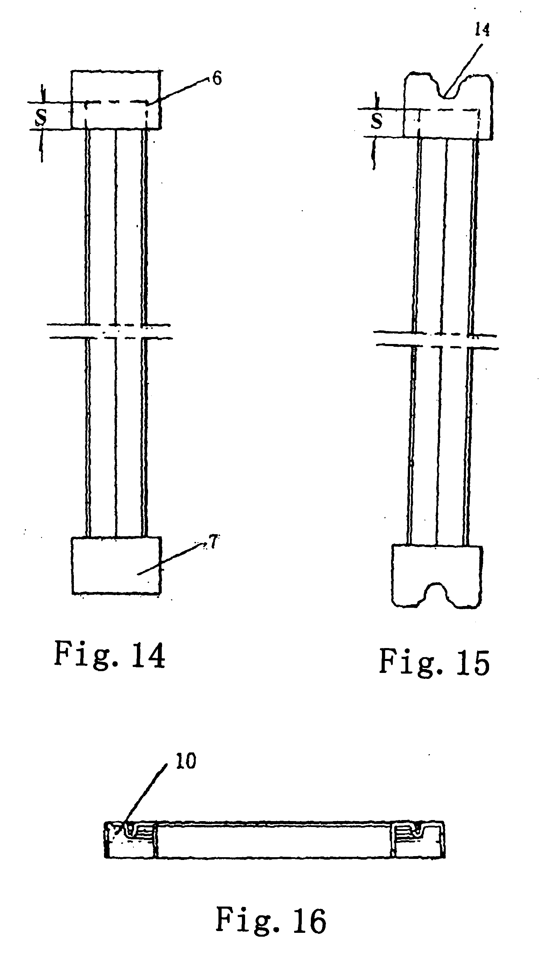

As another optional embodiment and as shown in Figs. 13, 15, an upper end surface of the annular upper ring 6 and / or a lower end surface of the annular lower ring 7 can be provided with annular recesses 14 to improve the sealing effect.

In order to improve the sealing effect, in the present invention, as shown in Figs. 16-17, a sealing ring 10 is provided outside the annular upper ring 6 and / or the annular lower ring 7. The sealing ring 10 can be made of an elastic material, such as polyurethane, rubber, etc.

In the filter element and filter of the present invention, the two ends of the cylindrical filter paper 8 can be bonded with the annular upper ring 6 and the annular lower ring 7 through injection-molding. As shown in Figs. 14-15, the two ends of the cylindrical filter paper 8 have certain bonding heights S with the annular upper ring 6 and the annular lower ring 7, so as to improve the bonding strength between the cylindrical filter paper 8 and the annular upper ring 6 or the annular lower ring 7, and hence prolong the service life of the filter element 2.

In the filter element and filter of the present invention, the annular upper ring 6 and / or the annular lower ring 7 can be made of polyurethane.

In the filter element and filter of the present invention, as a detailed embodiment shown in Figs. 7 and 12, the cylindrical filter paper 8 is concretely cylindrical, and the annular upper ring 6 and the annular lower ring 7 form a circular respectively.

The working processes of the removable filter element 2 of the filter of the present invention are described as follows:
When the dust collector is powered on, the motor of the dust collector will be started; a negative pressure will be generated when the motor is in a high rotation speed, and gases with dust will be sucked into the dust collecting portion of the dust collector body, through a suction nozzle and dust absorption hose, and enter the folds of the cylindrical filter paper 8 of the filter element 2 for filtration through the apertures 5 around the cylinder of the filter closure 1; the clean gases after filtration will be discharged below the filter element 2 into the motor of the dust collector.

The direction shown with the arrow in Fig. 9 is the direction in which the air enters the cylinder of the filter closure.

When the filer element 2 needs to be cleaned after the dust collector being used for a period of time, the filter element 2 shall be taken out from the filter closure 1 at first, and then the filter element 2 shall be directly pulled off to expand distances between the folds of the cylindrical filter paper 8, for the convenience of sweeping or cleaning the dust on the folds of the cylindrical filter paper 8, so that dust on the folds can be cleared off, and the air permeability and the filtration effect of the cylindrical filter paper 8 can be improved. After cleaning, healing the filter element 2 and housing the two ends of the filter element 2 with two sealing rings, then mount them together into the filter closure 1, thus the dust collector will continue to work.

## Claims

1. A filter element, comprising a cylindrical filter paper having a plurality of folds and a cylindrical shape, as well as an annular upper ring and an annular lower ring connected to two ends of the cylindrical filter paper, **characterized in that** gaps are respectively formed, at least in positions on the outer peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

2. A filter element according to claim 1, **characterized in that** the two ends of the cylindrical filter paper are coupled to positions between the inner peripheral surfaces and the outer peripheral surfaces of the annular upper ring and the annular lower ring, respectively.

3. A filter element according to claim 1, **characterized in that** gaps are respectively formed, in positions on the inner peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

4. A filter element according to claim 1 or 3, **characterized in that** the radial depths of the gaps on the annular upper ring and the annular lower ring are smaller than the radial widths from the outer peripheral surfaces to the inner peripheral surfaces of the annular upper ring and the annular lower ring.

5. A filter element according to claim 1 or 3, **characterized in that** the radial depths of the gaps on the outer peripheral surfaces are smaller than the corresponding distances from the central portions of the folds of the cylindrical filter paper to the outer peripheral surfaces.

6. A filter element according to claim 3, **characterized in that** the radial depths of the gaps on the inner peripheral surfaces are smaller than the corresponding distances from the central portions of the folds of the cylindrical filter paper to the inner peripheral surfaces.

7. A filter element according to claim 1, **characterized in that** the upper end surface of the annular upper ring and / or the lower end surface of the annular lower ring is an annular plane.

8. A filter element according to claim 1, **characterized in that** the upper end surface of the annular upper ring and / or the lower end surface of the annular lower ring is provided with an annular recess.

9. A filter element according to claim 1, **characterized in that** the two ends of the cylindrical filter paper are bonded with the annular upper ring and the annular lower ring through injection-molding.

10. A filter element according to claim 1, **characterized in that** the two ends of the cylindrical filter paper have certain bonding heights with the annular upper ring and the annular lower ring.

11. A filter element according to claim 1, **characterized in that** the annular upper ring and / or the annular lower ring is provided with a sealing ring.

12. A filter element according to claim 1, **characterized in that** the annular upper ring and / or the annular lower ring is made of polyurethane.

13. A filter, comprising a filter closure consisting of a hollow cylinder having a plurality of apertures around, and a base having a hole at the bottom and protruding inward; and a filter element mounted in the filter closure and connected to the base, wherein the filter element consists of a cylindrical filter paper having a plurality of folds and a cylindrical shape, as well as an annular upper ring and an annular lower ring connected to two ends of the cylindrical filter paper, **characterized in that** the filter element forms gaps respectively, at least in positions on the outer peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

14. A filter according to claim 13, **characterized in that** the two ends of the cylindrical filter paper are coupled to positions between the inner peripheral surfaces and the outer peripheral surfaces of the annular upper ring and the annular lower ring, respectively.

15. A filter according to claim 13, **characterized in that** gaps are respectively formed, in positions on the inner peripheral surfaces of the annular upper ring and the annular lower ring, wherein each position is corresponding to an approximately central portion of each of the folds of the cylindrical filter paper, and the gaps are linked up in an up and down direction of the annular upper ring and the annular lower ring.

16. A filter according to claim 13 or 15, **characterized in that** the radial depths of the gaps on the annular upper ring and the annular lower ring are smaller than the radial widths from the outer peripheral surfaces to the inner peripheral surfaces of the annular upper ring and the annular lower ring.

17. A filter according to claim 13 or 15, **characterized in that** the radial depths of the gaps on the outer peripheral surfaces are smaller than the corresponding distances from the central portions of the folds of the cylindrical filter paper to the outer peripheral surfaces.

18. A filter according to claim 15, **characterized in that** the radial depths of the gaps on the inner peripheral surfaces are smaller than the corresponding distances from the central portions of the folds of the cylindrical filter paper to the inner peripheral surfaces.

19. A filter according to claim 13, **characterized in that** the upper end surface of the annular upper ring and / or the lower end surface of the annular lower ring is an annular plane.

20. A filter according to claim 13, **characterized in that** the upper end surface of the annular upper ring and / or the lower end surface of the annular lower ring is provided with an annular recess.

21. A filter according to claim 13, **characterized in that** the two ends of the cylindrical filter paper are bonded with the annular upper ring and the annular lower ring through injection-molding.

22. A filter according to claim 13, **characterized in that** the two ends of the cylindrical filter paper have certain bonding heights with the annular upper ring and the annular lower ring.

23. A filter according to claim 13, **characterized in that** the annular upper ring and / or the annular lower ring is provided with a sealing ring.

24. A filter according to claim 13, **characterized in that** the annular upper ring and / or the annular lower ring is made of polyurethane.
